# EUROPEAN PATENT SPECIFICATION

(11) **EP 3 460 482 B1**
(45) Date of publication and mention of the grant of the patent: **31.08.2022**
(21) Application number: 17192956.5
(22) Date of filing: 25.09.2017
(51) Int. Cl.: G01N 35/00, G01N 35/04, B01L 3/00

(54) **METHOD OF HANDLING A LABORATORY SAMPLE CONTAINER, LABORATORY APPARATUS AND LABORATORY AUTOMATION SYSTEM**
VERFAHREN ZUR HANDHABUNG EINES LABORPROBEBEHÄLTERS, LABORVORRICHTUNG UND LABORAUTOMATISIERUNGSSYSTEM
PROCÉDÉ DE MANIPULATION D'UN RÉCIPIENT D'ÉCHANTILLONS DE LABORATOIRE, APPAREIL DE LABORATOIRE ET SYSTÈME D'AUTOMATISATION DE LABORATOIRE

(43) Date of publication of application: 27.03.2019
(73) Proprietor: Roche Diagnostics GmbH, 68305 Mannheim (DE); F. Hoffmann-La Roche AG, 4070 Basel (CH)
(72) Inventor: MALINOWSKI, Michal, 74321 Bietigheim-Bissingen (DE)
(74) Representative: Patentanwälte Ruff, Wilhelm, Beier, Dauster & Partner mbB

(56) References cited:
- WO-A1-98/36260
- US-A- 3 684 455
- US-A- 4 227 620
- US-A- 4 264 204
- US-A1- 2004 096 986
- US-A1- 2006 199 275
- US-A1- 2014 256 058
- US-A1- 2015 017 078
- US-A1- 2017 059 599

## Description

### TECHNICAL FIELD AND PRIOR ART

The invention relates to a method of handling a laboratory sample container. Furthermore, the invention relates to a laboratory apparatus and a laboratory automation system comprising such a laboratory apparatus.

Known laboratory automation systems typically comprise a number of laboratory stations. The laboratory stations may require laboratory sample containers such as sample tubes to be open for processing, in particular analyzing, laboratory samples comprised by the laboratory sample containers. Furthermore, the laboratory automation systems typically comprise a laboratory sample distribution system in order to distribute or to move the laboratory samples comprised by the open laboratory sample containers between the number of laboratory stations. Such a laboratory automation system is shown in document EP 3 073 270 A1.

US 2014/0256058 A1 discloses a sample tube with an improved lid.

US 4,264,204 A discloses a container for collecting and processing fluid specimens for analysis. US 2006/0199275 A1 discloses a method and a tool for filtrating specimen using a specimen sampling container.

US 2015/0017078 A1 discloses a sample handling system for handling samples contained in tubes.

US 2017/0059599 A1 discloses a laboratory cargo distribution system for distributing samples contained in sample container carriers between different laboratory stations.

US 2004/0096986 A1 discloses a system for sample fi-action collection in chromatography, and more specifically for using an extended vessel assembly that increases the total collectible volume of a liquid sample fraction in a single collection vessel in an automated system for collection, purification, and storage of purified sample fractions.

WO 98/36260 A1 discloses an individual septum capped microtube.

### SUMMARY OF THE INVENTION

It is the object of the invention to provide a method for handling a laboratory sample container in an improved manner than in the prior art. It is a further object of the invention to provide a laboratory apparatus and a laboratory automation system comprising such a laboratory apparatus.

These objects are solved by a method according to claim 1, a laboratory apparatus according to claim 10 and a laboratory automation system according to claim 12. Preferred embodiments are defined in the dependent claims.

The invention relates to a method of handling, in particular automatically handling, a laboratory sample container. The method comprises the steps: a) automatically ensuring, that an opening of the laboratory sample container comprising a laboratory sample is open, wherein the laboratory sample is a blood sample or a urine sample, and b) attaching, in particular automatically attaching, a prolongation to the laboratory sample container, such that the prolongation surrounds or encircles the opening of the laboratory sample container and protrudes the opening, such that the laboratory sample comprised or contained by the open laboratory sample container is retained or hold back by the attached prolongation. Attaching is performed after ensuring.

The method or the attached prolongation, respectively, enables to reduce or to prevent a spilling of the laboratory sample, if present, comprised by the open laboratory sample container out of the laboratory sample container and the attached prolongation, in particular during moving the open laboratory sample container by a laboratory sample distribution system. Thereby, contamination of the laboratory sample distribution system and/or other laboratory sample containers and/or other laboratory samples may be reduced or avoided. Furthermore, the method or the attached prolongation, respectively, still enables a relatively easy access to the laboratory sample comprised by the open laboratory sample container, in particular for a number of laboratory stations.

The laboratory sample container may be designed as a tube made of glass or transparent plastic and may have the opening at an upper or top end.

Moreover, the laboratory sample container and its opening, respectively, may be closed by a cap or a closure. The cap may comprise rubber and/or plastic or may completely consist of rubber and/or plastic. In particular step a) may comprise: opening the laboratory sample container, when the opening is closed, in particular by removing the cap, if present, from the laboratory sample container.

The prolongation may be denoted as an extension or a collar. The prolongation may be attached to or be in contact with the laboratory sample container at an outside surface in the region of the opening, in particular at a circumference of the laboratory sample container. The prolongation may completely surround the opening without a gap or an interruption, in particular along the circumference. In other words: the prolongation may comprise or have a form of a closed ring or tube with two open ends, in particular directly after the attachment of the prolongation. Protruding the opening of the laboratory sample container may be denoted as extending or prolonging the laboratory sample container.

The laboratory sample may be a liquid.

Step b) comprises: forming the prolongation by rotating a prolongation blank with respect to the laboratory sample container around the laboratory sample container. In particular the forming of the prolongation may comprise rolling of the laboratory sample container on the prolongation blank. The rotating may be around a longitudinal axis of the laboratory sample container. The prolongation blank may be provided from a prolongation blank supply roll.

According to an embodiment of the invention the attached prolongation protrudes the opening by a length of at least 1 millimeter (mm) to 20 mm, in particular of at least 5 mm to 15 mm, in particular exactly 10 mm.

According to an embodiment of the invention the prolongation comprises a laboratory sample-repellent property, in particular at an inside of the prolongation and/or above the opening. This enables a relatively high reliability of the prolongation and/or enables a relatively high retaining of the laboratory sample, if present. In particular the prolongation may comprise a liquid-tight property. The prolongation may comprise a barrier material, in particular coated aluminum foil (Alu/PE, Alu/PP), coated paper (PA/PE), a composite material according DIN 55 531 or TL 8135-0003 or TL 8135-0006 A/B, another material as oPP or a, in particular thermoplastic, foil (PE).

According to an embodiment of the invention step b) comprises: adhering the prolongation to the laboratory sample container. In particular the prolongation may comprise an adhesive, in particular a pressure sensitive adhesive. The adhering may be denoted as sticking or gluing.

According to an embodiment of the invention the laboratory sample container comprises a from-the-outside optically readable tag. The method comprises the step: optically reading, in particular automatically reading, the tag during step b). Thereby, the rotating has multiple uses. Typically the tag will not surround the laboratory sample container completely, in particular not around the circumference of the laboratory sample container, but rather may be readable only from one side of the laboratory sample container. The rotating may enable the reading of the tag. In particular the tag may be an identification tag being adapted to enable identifying the laboratory sample, if present, comprised by the laboratory sample container. The tag may comprise or be a barcode.

According to an embodiment of the invention the method comprises the step: c) moving, in particular translationally moving and/or automatically moving, the open laboratory sample container with the attached prolongation by a laboratory sample distribution system.

According to an embodiment of the invention the laboratory sample distribution system comprises a sample container carrier, a transport plane and a number of drive elements (e.g. 1 to 10000). The sample container carrier is adapted to carry the laboratory sample container. The transport plane is adapted to support the sample container carrier. The number of drive elements is adapted to move the sample container carrier on the transport plane. Step c) comprises: moving the sample container carrier with the carried laboratory sample container on the transport plane by the number of drive elements.

The transport plane may comprise a step, a bump or a hole and/or have a different surface friction at different positions, which may have caused a spilling of the laboratory sample out of the open laboratory sample container without the attached prolongation during the moving. Additionally or alternatively the number of drive elements may accelerate or decelerate the laboratory sample container during the moving in a manner, which may have caused a spilling of the laboratory sample out of the open laboratory sample container without the attached prolongation.

The transport plane may also be denoted as transport surface. The transport plane may support the sample container carrier, what may also be denoted as carrying the sample container carrier. The sample container carrier may be translationally moved on the transport plane. The sample container carrier may be adapted to move in two dimensions on the transport plane. The sample container carrier may slide over the transport plane. The sample container carrier may move on the transport plane along an individual transport path. In particular the laboratory sample distribution system may comprise a plurality of sample container carriers (e.g. 1 to 1000).

According to an embodiment of the invention the number of drive elements comprises a number of electro-magnetic actuators. The number of electro-magnetic actuators is stationary arranged in a grid below the transport plane and is adapted to generate a magnetic field to move the sample container carrier on the transport plane. The sample container carrier comprises a magnetically active element. The magnetically active element is adapted to interact with the magnetic field generated by the number of electro-magnetic actuators, such that a move force, in particular a magnetic move force, is applied to the sample container carrier. Step c) comprises: moving the sample container carrier by the number of electro-magnetic actuators.

The arrangement of the number of electro-magnetic actuators in the grid may accelerate or decelerate the laboratory sample container during the moving in a manner, which may have caused a spilling of the laboratory sample out of the open laboratory sample container without the attached prolongation.

The electro-magnetic actuators may be solenoids surrounding ferromagnetic cores. Furthermore, the electro-magnetic actuators may be driven or energized individually in order to generate or to provide the magnetic field. The electro-magnetic actuators may be arranged in two dimensions. The grid may have rows and columns, along which the electro-magnetic actuators are arranged. The electro-magnetic actuators may be arranged in a plane parallel to the transport plane. The magnetically active element may be a permanent magnet or an electromagnet. The magnetically active element may comprise a magnetically soft material.

According to an embodiment of the invention the method comprises the step: d) closing, in particular automatically closing, the opening of the laboratory sample container by sealing or shutting the attached prolongation, in particular above and/or beyond the opening. This may enable to store the laboratory sample, if present, comprised by the laboratory sample container. Additionally or alternatively this may enable to ship the laboratory sample, if present, comprised by the laboratory sample container. The attached prolongation may be pressed together. The prolongation may comprise an adhesive, in particular a pressure sensitive adhesive. In particular, the prolongation may comprise a hot sealable property and may be sealed by heat treatment. The prolongation may comprise a hot sealable material, in particular cellophane, BOPP, POP (Polyolefin Plastomere), PE-VLD (very low density), PE-LD (low density), PE-LLD (linear low density) and/or PE-HD (high density). A seal temperature of the prolongation may be in a range from 30 degrees Celsius (°C) to 200 °C, in particular from 60 °C to 180 °C, in particular from 90 °C to 140 °C, in particular from 95 °C to 120 °C, in particular from 100 °C to 110 °C.

The invention further relates to a laboratory apparatus. The laboratory apparatus comprises an ensurer and an attacher. The ensurer is adapted to ensure that an opening of a laboratory sample container comprising a laboratory sample is open. The laboratory sample is a blood sample or a urine sample. The attacher is adapted to attach a prolongation to the laboratory sample container, such that the prolongation surrounds the opening of the laboratory sample container and protrudes the opening. The laboratory apparatus is adapted, such that the laboratory sample comprised by the open laboratory sample container is retained by the attached prolongation, and such that attaching is performed after ensuring.

The laboratory apparatus is adapted to perform the method as described above. By means of the method according to the invention, the advantages of the method according to the invention, as discussed above, may be made applicable for the laboratory apparatus.

The ensurer may comprise or be an opener being adapted to open the laboratory sample container, when closed. In particular the ensurer may comprise or be a decapper being adapted to remove the cap, if present, from the laboratory sample container.

The attacher is adapted to supply a prolongation blank to the laboratory sample container, such that the prolongation is formed by a rotation of the prolongation blank with respect to the laboratory sample container around the laboratory sample container. In particular the laboratory apparatus may comprise a rotator, wherein the rotator may be adapted to rotate the prolongation blank and/or the laboratory sample container. Additionally or alternatively the laboratory apparatus and its attacher, respectively, may comprise a receptacle for a prolongation blank supply roll.

According to an embodiment of the invention the laboratory apparatus comprises an optical reader. The optical reader is adapted to optically read a from-the-outside optically readable tag comprised by the laboratory sample container during a rotation of the optical reader with respect to the laboratory sample container around the laboratory sample container. In particular the optical reader may comprise or be a camera and/or a barcode reader. Additionally or alternatively the laboratory apparatus may comprise a rotator, wherein the rotator may be adapted to rotate the optical reader and/or the laboratory sample container.

According to an embodiment of the invention the laboratory apparatus may comprise a sealer wherein the sealer may be adapted to close the opening of the laboratory sample container by sealing the attached prolongation. In particular the sealer may comprise or be a heat sealer.

The invention further relates to a laboratory automation system. The laboratory automation system comprises a laboratory apparatus as described above and a laboratory sample distribution system. The laboratory sample distribution system is adapted to move the open laboratory sample container with the attached prolongation.

By means of the laboratory apparatus according to the invention, the advantages of the laboratory apparatus according to the invention, as discussed above, may be made applicable for the laboratory automation system.

The laboratory sample distribution system may be embodied as described above. Additionally the laboratory sample distribution system may comprise a control device. The control device may comprise or be an integrated circuit, a tablet computer, a smartphone or a computer. In particular the control device may be configured to control the number of drive elements, if present, such that the sample container carrier with the carried laboratory sample container moves on the transport plane by the number of drive elements. Furthermore, the control device may be configured to control the number of electro-magnetic actuators, if present, such that the sample container carrier with the carried laboratory sample container moves on the transport plane by the number of electro-magnetic actuators. The laboratory sample distribution system may comprise the plurality of sample container carriers. The control device may be configured to control the number of drive elements or the number of electro-magnetic actuators, if present, such that the plurality of sample container carriers moves on the transport plane along corresponding, in particular individual, transport paths simultaneously.

According to an embodiment of the invention the laboratory automation system comprises a number of laboratory stations. The laboratory sample distribution system is adapted to distribute or to move the laboratory sample container and/or the laboratory sample, if present, and/or the sample container carrier, if present, between the laboratory stations.

The laboratory stations may be arranged adjacent or directly next to the laboratory sample distribution system, in particular to the transport plane, if present, of the laboratory sample distribution system. The number of laboratory stations may comprise pre-analytical, analytical and/or post-analytical laboratory stations. Pre-analytical laboratory stations may be adapted to perform any kind of pre-processing of laboratory samples, laboratory sample containers and/or sample container carriers. Analytical laboratory stations may be adapted to use a laboratory sample or a part of the laboratory sample and a reagent to generate a measuring signal, the measuring signal indicating if and in which concentration, if any, an analyte is existing. Post-analytical laboratory stations may be adapted to perform any kind of post-processing of laboratory samples, laboratory sample containers and/or sample container carriers. The pre-analytical, analytical and/or post-analytical laboratory stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, a sealing/desealing station, a pushing station, a belt station, a conveying system station and/or a gripper station for moving the sample container to or from the sample container carrier.

The laboratory apparatus, the ensurer, the attacher, the optical reader, if present, the rotator, if present, and/or the sealer, if present, may be denoted as a laboratory station/s.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a flow chart of a method according to the invention,
- Fig. 2: shows a laboratory sample container with a closed opening,
- Fig. 3: shows a laboratory apparatus according to the invention comprising an ensurer,
- Fig. 4: shows the laboratory apparatus of Fig. 3 comprising the ensurer ensuring that the opening of the laboratory sample container of Fig. 2 is open,
- Fig. 5: shows the laboratory sample container of Fig. 2 with the opening being open,
- Fig. 6: shows a side view of the laboratory apparatus according to the invention comprising an attacher attaching a prolongation to the laboratory sample container of Fig. 2,

- Fig. 7: shows a top view of the laboratory apparatus and the attacher of Fig. 6,
- Fig. 8: shows the open laboratory sample container of Fig. 2 with the attached prolongation carried by a sample container carrier,
- Fig. 9: shows the laboratory apparatus according to the invention comprising a sealer sealing the attached prolongation of Fig. 8 and
- Fig. 10: shows a laboratory automation system according to the invention comprising the laboratory apparatus according to the invention, a laboratory sample distribution system comprising the sample container carrier of Fig. 8 and a number of laboratory stations.

### DETAILED DESCRIPTION OF EMBODIMENTS OF THE INVENTION

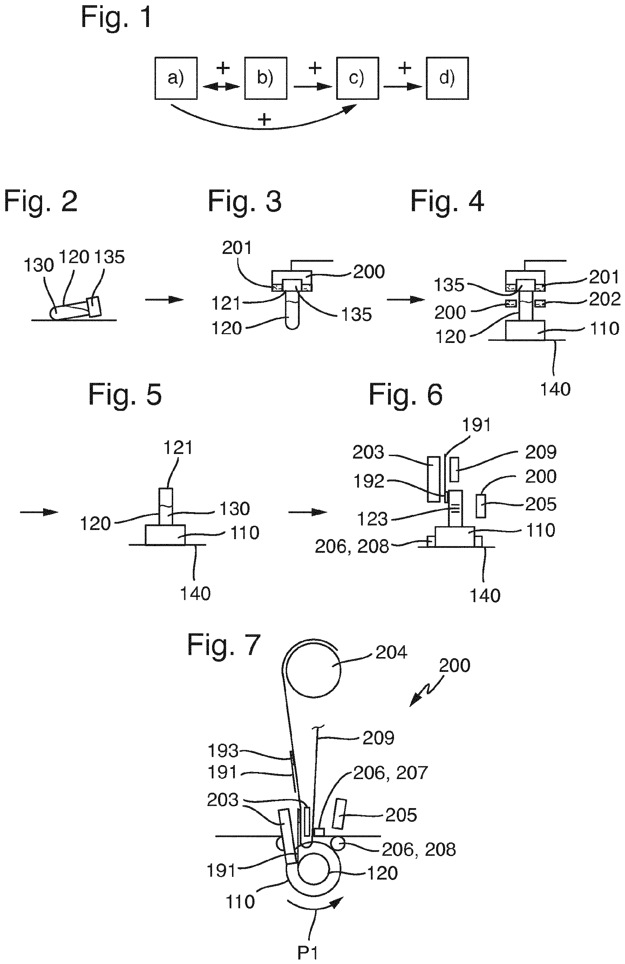

Fig. 1 shows an inventive method of handling a laboratory sample container 120, as shown in Fig. 2. The method comprises the steps: a) ensuring that an opening 121 of the laboratory sample container 120 is open, as shown in Fig. 3 to 5, and b) attaching a prolongation 190 to the laboratory sample container 120, such that the prolongation 190 surrounds the opening 121 of the laboratory sample container 120 and protrudes the opening 121, as shown in Fig. 6 to 8, such that a laboratory sample 130 comprised by the open laboratory sample container 120 is retained by the attached prolongation 190.

Fig. 3 to 10 show an inventive laboratory automation system 10 comprising an inventive laboratory apparatus 200. The laboratory apparatus comprises an ensurer 201, 202 and an attacher 203. The ensurer 201, 202 is adapted to ensure that the opening 121 of the laboratory sample container 120 is open. The attacher 203 is adapted to attach the prolongation 190 to the laboratory sample container 120, such that the prolongation 190 surrounds the opening 121 of the laboratory sample container 120 and protrudes the opening 121. The laboratory apparatus 200 is adapted, such that the laboratory sample 130 comprised by the open laboratory sample container 120 is retained by the attached prolongation 190.

In the shown embodiment the laboratory sample container 120 is designed as a tube and has the opening 121 at an, in particular upper, end, as shown in Fig. 5. In Fig. 2 to 4 the laboratory sample container 120 and its opening 121, respectively, are closed by a cap 135. The laboratory sample container 120 comprises the laboratory sample 130 in form of a liquid.

In detail the laboratory apparatus 200 and its ensurer 201, 202, respectively, are adapted to pick the laboratory sample container 120 up, as shown in Fig. 3. Furthermore, the laboratory apparatus 200 and its ensurer 201, 202, respectively, are adapted to align or orient the laboratory sample container 120, in particular with its opening 121 up. This may be denoted as aligning the laboratory sample container 120.

The ensurer 201, 202 is embodied as an opener being adapted to open the closed laboratory sample container 120, in particular to remove the cap 135 from the laboratory sample container 120. In detail the ensurer comprises a first gripper 201 and a second gripper 202 being different from the first gripper 201. The second gripper 202 is adapted to grip the laboratory sample container 120, in particular at its circumference. The first gripper 201 is adapted to grip the cap 135, in particular at its circumference. Moreover, the first gripper 201 and the second gripper 202 are adapted to remove the cap 135 from the laboratory sample container 120 by moving the cap 135 and the laboratory sample container 120 away from each other, as shown in Fig. 4.

Step a) comprises: opening the laboratory sample container 120, in particular by the ensurer 201, 202 in form of the opener.

Step b) comprises: adhering the prolongation 190 to the laboratory sample container 120, in particular by the attacher 203.

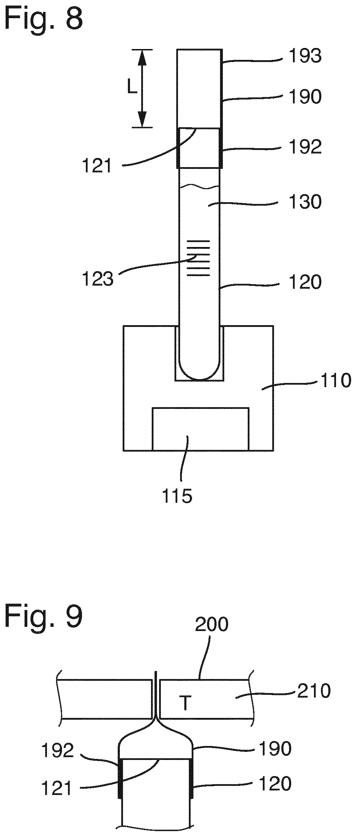

In detail the prolongation 190 comprises an adhesive or an adhesive layer or an adhesive strip 192, in particular at an in Fig. 8 lower end of the prolongation 190. The prolongation 190 is adhered to the laboratory sample container 120 by the adhesive 192.

Further, the attacher 203 is adapted to supply a prolongation blank 191 to the laboratory sample container 120, such that the prolongation 190 is formed by a rotation of the prolongation blank 191 with respect to the laboratory sample container 120 around the laboratory sample container 120, as shown in Fig. 6 and 7. In detail the laboratory apparatus 200 comprises a rotator 206. The rotator 206 is adapted to rotate the laboratory sample container 120 around a longitudinal axis of the laboratory sample container 120, as shown by arrow P1. Furthermore, the laboratory apparatus 200 and its attacher 203, respectively, comprise a receptacle 204 for a prolongation blank supply roll. The prolongation blank 191 is supplied or provided from a carrier band 209.

Step b) comprises: forming the prolongation 190 by rotating the prolongation blank 191 with respect to the laboratory sample container 120 around the laboratory sample container 120, in particular by the attacher 203.

In detail the prolongation blank 191 has a rectangular shape, in particular directly before the attachment. The prolongation blank 191 comprises the adhesive 192 at its lower end or its lateral edge, as shown in Fig. 6. Additionally the prolongation blank 191 comprises an adhesive 193 at its back vertical edge, as shown in Fig. 7.

The prolongation blank 191 is rolled to the prolongation 190 around the laboratory sample container 120. Thereby, the prolongation 190 is adhered to the laboratory sample container 120 at an outside surface completely along or around a circumference of the opening 121 by the adhesive 192. Additionally the prolongation 190 is adhered to itself by the adhesive 193. The attached prolongation 190 has a form of a closed ring and completely surrounds the laboratory sample container 120 and its opening 121, respectively, without a gap.

The attached prolongation 190 protrudes the opening 121 by a length L of 20 mm, as shown in Fig. 8.

Furthermore, the prolongation 190 comprises a laboratory sample-repellent property. In particular the prolongation 190 comprises a liquid-tight barrier material.

Moreover, the laboratory sample container 120 comprises a from-the-outside optically readable tag 123 in form of a barcode, as shown in Fig. 6 and 8.

The laboratory apparatus 200 comprises an optical reader 205 in form of a barcode reader. The optical reader 205 is adapted to optically read the from-the-outside optically readable tag 123 comprised by the laboratory sample container 120 during a rotation of the optical reader 205 with respect to the laboratory sample container 120 around the laboratory sample container 120.

The method comprises the step: optically reading the tag 123 during step b), in particular by the optical reader 205.

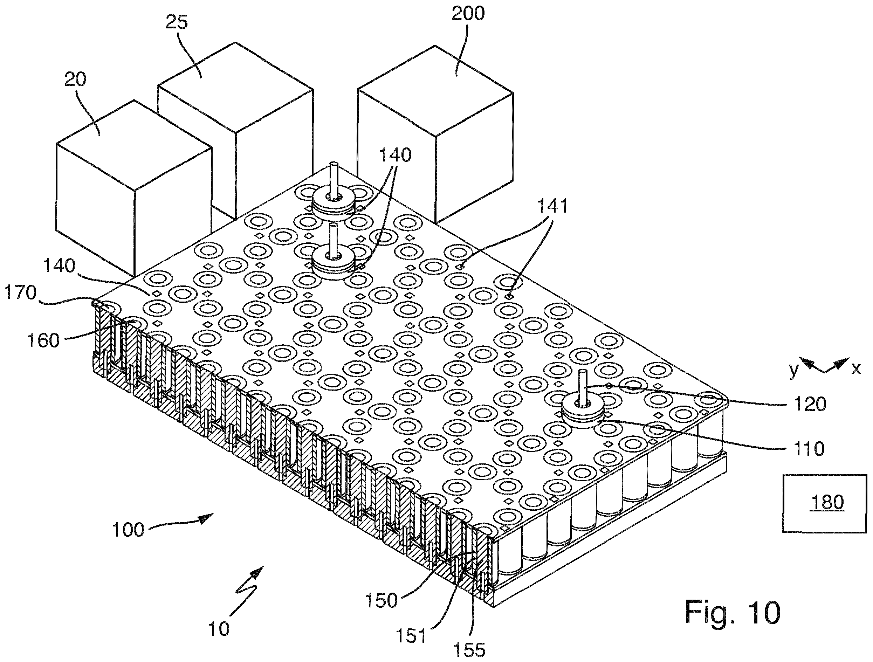

Further, the laboratory automation system 10 comprises a laboratory sample distribution system 100, as shown in Fig. 10. The laboratory sample distribution system 100 is adapted to move the open laboratory sample container 120 with the attached prolongation 190.

The method comprises the step: c) moving the open laboratory sample container 120 with the attached prolongation 190 by the laboratory sample distribution system 100.

The attached prolongation enables to reduce or to prevent a spilling of the laboratory sample 130 comprised by the open laboratory sample container 120 out of the laboratory sample container 120 and the attached prolongation 190.

In the shown embodiment the laboratory sample distribution system comprises a sample container carrier 110, a transport plane 140 and a number of drive elements 150. The sample container carrier 110 is adapted to carry the laboratory sample container 120. The transport plane 140 is adapted to support the sample container carrier 110. The number of drive elements 150 is adapted to move the sample container carrier 110 on the transport plane 140.

In detail the sample container carrier 110 can be translationally moved in two dimensions x, y being perpendicular to each other on or over the transport plane 140. In the shown embodiment a sliding surface of the sample container carrier 110 is adapted to be in contact with the transport plane 140 and enables performing movements, in particular slides, of the sample container carrier 110 on the transport plane 150. In particular the laboratory sample distribution system 100 comprises a plurality of sample container carriers 110. Self-evidently, more than the three sample container carriers 110 depicted in Fig. 10 may be comprised in the laboratory sample distribution system 100. Additionally the laboratory sample distribution system 100 comprises a control device 180. The control device 180 is configured to control the number of drive elements 150, such that the sample container carrier 110 with the carried laboratory sample container 120 moves on the transport plane 140 by the number of drive elements 150. In particular the control device 180 is configured to control the number of drive elements 150, such that the plurality of sample container carriers 110 moves on the transport plane 140 along corresponding transport paths, in particular each of the sample container carriers 110 along an individual transport path simultaneously.

Step c) comprises: moving the sample container carrier 110 with the carried laboratory sample container 120 on the transport plane 140 by the number of drive elements 150, in particular along an individual transport path.

In detail the number of drive elements 150 comprises a number of electro-magnetic actuators 151. The number of electro-magnetic actuators 151 is stationary arranged in a grid 160, 170 below the transport plane 140 and is adapted to generate a magnetic field to move the sample container carrier 110 on the transport plane 140. The sample container carrier 110 comprises a magnetically active element 115 in form of a permanent magnet, as shown in Fig. 8. The magnetically active element 115 is adapted to interact with the magnetic field generated by the number of electro-magnetic actuators 151, such that a move force is applied to the sample container carrier 110.

Additionally the control device 180 is configured to control the number of electro-magnetic actuators 151, such that the sample container carrier 110 with the carried laboratory sample container 120 moves on the transport plane 140 by the number of electro-magnetic actuators 151, in particular along an individual transport path.

Step c) comprises: moving the sample container carrier 110 by the number of electro-magnetic actuators 151, in particular along an individual transport path.

In the shown embodiment the electro-magnetic actuators 151 are implemented as solenoids having a solid ferromagnetic core 155. The electro-magnetic actuators 151 are quadratically arranged in the grid having rows 160 and columns 170, in particular in a plane parallel to the transport plane 140. In each center of a quadrat formed by corresponding electro-magnetic actuators 151 no electro-magnetic actuator is arranged. In other words: in each second row in each second position there is no electro-magnetic actuator 151. Additionally the electro-magnetic actuators 151 can be driven individually, in particular by the control device 180, in order to generate the magnetic field.

Furthermore, the laboratory sample distribution system 100 comprises a number of Hall-sensors 141. The number of Hall-sensors 141 is arranged, such that a position of a respective sample container carrier 110 on the transport plane 140 can be detected. The control device 180 is functionally coupled to the Hall-sensors 141 for detecting the position of the sample container carrier 110. The control device 180 is adapted to control the electro-magnetic actuators 151 in response to the detected position.

In the shown embodiment the laboratory apparatus 200 or its ensurer 201, 202, respectively, is adapted to insert the laboratory sample container 120 into the sample container carrier 110, in particular on the transport plane 140, as shown in Fig. 4. Then the laboratory sample distribution system 100 moves, in particular relatively slowly moves, the open laboratory sample container 120 from the ensurer 201, 202 to the attacher 203, in particular by its sample container carrier 110, as shown in Fig. 5. In alternative embodiments the laboratory apparatus may be embodied, such that the open laboratory sample container carrier does not have to be moved from the ensurer to the attacher.

The rotator 206 comprises an electro-magnetic actuator 207 and rotating rolls 208. The electro-magnetic actuator 207 is adapted to attract the magnetically active element 115 and, therefore, to pull the sample container carrier 110 against the rotating rolls 208. The rotating rolls 208 are adapted to rotate the sample container carrier 110 and, therefore, the carried laboratory sample container 120.

Further, the laboratory automation system 10 comprises a number of laboratory stations 20, 25. The laboratory sample distribution system 100 is adapted to distribute or to move the, in particular open, laboratory sample container 120 and/or the laboratory sample 130 and/or the sample container carrier 110 between the laboratory stations 20, 25.

The number of laboratory stations 20, 25 may comprise at least one pre-analytical, analytical and/or post-analytical station. In the shown embodiment the laboratory stations 20, 25 are arranged adjacent to the laboratory sample distribution system 100 and its transport plane 140, respectively. Self-evidently, more than the two laboratory stations 20, 25 depicted in Fig. 10 may be comprised in the laboratory automation system 10.

The number of laboratory stations 20, 25 require the laboratory sample container 120 to be open for processing, in particular analyzing, the laboratory sample 130 comprised by the laboratory sample container 120.

The attached prolongation 190 enables an access to the laboratory sample 130 comprised by the open laboratory sample container 120 for the number of laboratory stations 20, 25. In particular the attached prolongation 190 enables to take the laboratory sample 130 or a part of the laboratory sample 130 out of the open laboratory sample container 120 and/or to put a reagent into the open laboratory sample container 120.

The laboratory apparatus 200, the ensurer 201, 202, the attacher 203, the optical reader 205, and/or the rotator 206 may be denoted as a laboratory station/s, as well.

Moreover, the laboratory apparatus 200 comprises a sealer 210, as shown in Fig. 9, which may also be denoted as a laboratory station. The sealer 210 is adapted to close the opening 121 of the laboratory sample container 120 by sealing the attached prolongation 190.

The method comprises the step: d) closing the opening 121 of the laboratory sample container 120 by sealing the attached prolongation 190, in particular by the sealer 210.

In detail the prolongation 190 is pressed together in Fig. 9 above the opening 121 by the sealer 210 and the prolongation 190 is adhered to itself. In the shown embodiment the prolongation 190 comprises a hot sealable material and is sealed by heat T. The sealer 210 is embodied as a heat sealer being adapted to seal the attached prolongation 190 by heat T. In alternative embodiments additionally or alternatively the prolongation may comprise an adhesive or an adhesive layer or an adhesive strip, in particular at an in Fig. 9 upper end of the prolongation. In other words: the prolongation blank, if present, may comprise the adhesive at its upper end or its lateral edge.

As the shown and above discussed embodiments reveal, the invention provides a method of handling a laboratory sample container in an improved manner than in the prior art. Furthermore, the invention provides a laboratory apparatus and a laboratory automation system comprising such a laboratory apparatus.

## Claims

1. Method of handling a laboratory sample container (120), the method comprising the steps:
- a) automatically ensuring that an opening (121) of the laboratory sample container (120) comprising a laboratory sample (130) is open, wherein the laboratory sample (130) is a blood sample or a urine sample, and
- b) attaching a prolongation (190) to the laboratory sample container (120), such that the prolongation (190) surrounds the opening (121) of the laboratory sample container (120) and protrudes the opening (121),
- such that the laboratory sample (130) comprised by the open laboratory sample container (120) is retained by the attached prolongation (190),
- wherein attaching is performed after ensuring,
**characterized by**
- step b) comprising: forming the prolongation (190) by rotating a prolongation blank (191) with respect to the laboratory sample container (120) around the laboratory sample container (120).

2. Method according to claim 1,
- wherein the attached prolongation (190) protrudes the opening (121) by a length (L) of at least 1 mm to 20 mm.

3. Method according to any one of the preceding claims,
- wherein the prolongation (190) comprises a laboratory sample-repellent property.

4. Method according to any one of the preceding claims,
- step b) comprising: adhering the prolongation (190) to the laboratory sample container (120).

5. Method according to any one of the preceding claims,
- wherein the laboratory sample container (120) comprises a from-the-outside optically readable tag (123),
the method comprising the step:
- optically reading the tag (123) during step b).

6. Method according to any one of the preceding claims, the method comprising the step:
- c) moving the open laboratory sample container (120) with the attached prolongation (190) by a laboratory sample distribution system (100).

7. Method according to claim 6,
- wherein the laboratory sample distribution system (100) comprises:
- a sample container carrier (110), wherein the sample container carrier (110) is adapted to carry the laboratory sample container (120),
- a transport plane (140), wherein the transport plane (140) is adapted to support the sample container carrier (110), and
- a number of drive elements (150), wherein the number of drive elements (150) is adapted to move the sample container carrier (110) on the transport plane (140),
- step c) comprising: moving the sample container carrier (110) with the carried laboratory sample container (120) on the transport plane (140) by the number of drive elements (150).

8. Method according to claim 7,
- wherein the number of drive elements (150) comprises a number of electro-magnetic actuators (151), wherein the number of electro-magnetic actuators (151) is stationary arranged in a grid (160, 170) below the transport plane (140) and is adapted to generate a magnetic field to move the sample container carrier (110) on the transport plane (140) and
- wherein the sample container carrier (110) comprises a magnetically active element (115), wherein the magnetically active element (115) is adapted to interact with the magnetic field generated by the number of electro-magnetic actuators (151), such that a move force is applied to the sample container carrier (110),
- step c) comprising: moving the sample container carrier (110) by the number of electro-magnetic actuators (151).

9. Method according to any one of the preceding claims, the method comprising the step:
- d) closing the opening (121) of the laboratory sample container (120) by sealing the attached prolongation (190).

10. Laboratory apparatus (200) adapted to perform a method according to claim 1, comprising:
- an ensurer (201, 202), wherein the ensurer (201, 202) is adapted to ensure that an opening (121) of a laboratory sample container (120) comprising a laboratory sample (130) is open, wherein the laboratory sample (130) is a blood sample or a urine sample, and
- an attacher (203), wherein the attacher (203) is adapted to attach a prolongation (190) to the laboratory sample container (120), such that the prolongation (190) surrounds the opening (121) of the laboratory sample container (120) and protrudes the opening (121),
- wherein the laboratory apparatus (200) is adapted, such that the laboratory sample (130) comprised by the open laboratory sample container (120) is retained by the attached prolongation (190), and such that attaching is performed after ensuring,
**characterized by**
- the attacher (203) is adapted to supply a prolongation blank (191) to the laboratory sample container (120), such that the prolongation (190) is formed by a rotation of the prolongation blank (191) with respect to the laboratory sample container (120) around the laboratory sample container (120).

11. Laboratory apparatus (200) according to claim 10, comprising:
- an optical reader (205), wherein the optical reader (205) is adapted to optically read a from-the-outside optically readable tag (123) comprised by the laboratory sample container (120) during a rotation of the optical reader (205) with respect to the laboratory sample container (120) around the laboratory sample container (120).

12. Laboratory automation system (10), comprising:
- a laboratory apparatus (200) according to claim 10 or 11 and
- a laboratory sample distribution system (100), wherein the laboratory sample distribution system (100) is adapted to move the open laboratory sample container (120) with the attached prolongation (190).

13. Laboratory automation system (10) according to claim 12, comprising:
- a number of laboratory stations (20, 25),
- wherein the laboratory sample distribution system (100) is adapted to distribute the laboratory sample container (120) and/or the laboratory sample (130) between the laboratory stations (20, 25).

## Patentansprüche

1. Verfahren zum Handhaben eines Laborprobenbehälters (120), wobei das Verfahren die folgenden Schritte umfasst:
- a) automatisches Sicherstellen, dass eine Öffnung (121) des Laborprobenbehälters (120), der eine Laborprobe (130) umfasst, offen ist, wobei die Laborprobe (130) eine Blutprobe oder eine Urinprobe ist, und
- b) Anbringen einer Verlängerung (190) an dem Laborprobenbehälter (120), so dass die Verlängerung (190) die Öffnung (121) des Laborprobenbehälters (120) umgibt und über die Öffnung (121) hinausragt,
- so dass die Laborprobe (130), die in dem offenen Laborprobenbehälter (120) enthalten ist, von der angebrachten Verlängerung (190) zurückgehalten wird,
- wobei das Anbringen nach dem Sicherstellen ausgeführt wird,
**dadurch gekennzeichnet, dass**
- Schritt b) Folgendes umfasst: Bilden der Verlängerung (190) durch Drehen eines Verlängerungszuschnitts (191) in Bezug auf den Laborprobenbehälter (120) um den Laborprobenbehälter (120).

2. Verfahren nach Anspruch 1,
- wobei die angebrachte Verlängerung (190) über die Öffnung (121) um eine Länge (L) von mindestens 1 mm bis 20 mm hinausragt.

3. Verfahren nach einem der vorstehenden Ansprüche,
- wobei die Verlängerung (190) eine die Laborprobe abweisende Eigenschaft umfasst.

4. Verfahren nach einem der vorstehenden Ansprüche,
- wobei Schritt b) Folgendes umfasst: Kleben der Verlängerung (190) an den Laborprobenbehälter (120).

5. Verfahren nach einem der vorstehenden Ansprüche,
- wobei der Laborprobenbehälter (120) eine von außen optisch lesbare Markierung (123) umfasst,
wobei das Verfahren den folgenden Schritt umfasst:
- optisches Lesen der Markierung (123) während Schritt b).

6. Verfahren nach einem der vorstehenden Ansprüche, wobei das Verfahren den folgenden Schritt umfasst:
- c) Bewegen des offenen Laborprobenbehälters (120) mit der angebrachten Verlängerung (190) durch ein Laborprobenverteilungssystem (100).

7. Verfahren nach Anspruch 6,
- wobei das Laborprobenverteilungssystem (100) Folgendes umfasst:
- einen Probenbehälterträger (110), wobei der Probenbehälterträger (110) dafür ausgelegt ist, den Laborprobenbehälter (120) zu tragen,
- eine Transportebene (140), wobei die Transportebene (140) dafür ausgelegt ist, den Probenbehälterträger (110) zu halten, und
- mehrere Antriebselemente (150), wobei die mehreren Antriebselemente (150) dafür ausgelegt sind, den Probenbehälterträger (110) auf der Transportebene (140) zu bewegen,
- wobei Schritt c) Folgendes umfasst: Bewegen des Probenbehälterträgers (110) mit dem getragenen Laborprobenbehälter (120) auf der Transportebene (140) durch die mehreren Antriebselemente (150).

8. Verfahren nach Anspruch 7,
- wobei die mehreren Antriebselemente (150) mehrere elektromagnetische Aktuatoren (151) umfassen, wobei die mehreren elektromagnetischen Aktuatoren (151) stationär in einem Gitter (160, 170) unter der Transportebene (140) angeordnet und dafür ausgelegt sind, ein Magnetfeld zu erzeugen, um den Probenbehälterträger (110) auf der Transportebene (140) zu bewegen, und
- wobei der Probenbehälterträger (110) ein magnetisch wirkendes Element (115) umfasst, wobei das magnetisch wirkende Element (115) dafür ausgelegt ist, mit dem von den mehreren elektromagnetischen Aktuatoren (151) erzeugten Magnetfeld zu interagieren, so dass eine Bewegungskraft auf den Probenbehälterträger (110) ausgeübt wird,
- wobei Schritt c) Folgendes umfasst: Bewegen des Probenbehälterträgers (110) durch die mehreren elektromagnetischen Aktuatoren (151).

9. Verfahren nach einem der vorstehenden Ansprüche, wobei das Verfahren den folgenden Schritt umfasst:
- d) Schließen der Öffnung (121) des Laborprobenbehälters (120) durch Abdichten der angebrachten Verlängerung (190).

10. Laborvorrichtung (200), die dafür ausgelegt ist, ein Verfahren nach Anspruch 1 auszuführen, umfassend:
- einen Sichersteller (201, 202), wobei der Sichersteller (201, 202) dafür ausgelegt ist, sicherzustellen, dass eine Öffnung (121) eines Laborprobenbehälters (120), der eine Laborprobe (130) umfasst, offen ist, wobei die Laborprobe (130) eine Blutprobe oder eine Urinprobe ist, und
- einen Anbringer (203), wobei der Anbringer (203) dafür ausgelegt ist, eine Verlängerung (190) an dem Laborprobenbehälter (120) anzubringen, so dass die Verlängerung (190) die Öffnung (121) des Laborprobenbehälters (120) umgibt und über die Öffnung (121) hinausragt,
- wobei die Laborvorrichtung (200) so ausgelegt ist, dass die in dem offenen Laborprobenbehälter (120) enthaltene Laborprobe (130) von der angebrachten Verlängerung (190) zurückgehalten wird, und so, dass das Anbringen nach dem Sicherstellen ausgeführt wird,
**dadurch gekennzeichnet, dass**
- der Anbringer (203) dafür ausgelegt ist, dem Laborprobenbehälter (120) einen Verlängerungszuschnitt (191) zuzuführen, so dass die Verlängerung (190) durch Drehen des Verlängerungszuschnitts (191) in Bezug auf den Laborprobenbehälter (120) um den Laborprobenbehälter (120) gebildet wird.

11. Laborvorrichtung (200) nach Anspruch 10, umfassend:
- ein optisches Lesegerät (205), wobei das optische Lesegerät (205) dafür ausgelegt ist, eine von außen optisch lesbare Markierung (123), die in dem Laborprobenbehälter (120) enthalten ist, während einer Drehung des optischen Lesegerätes (205) in Bezug auf den Laborprobenbehälter (120) um den Laborprobenbehälter (120) optisch zu lesen.

12. Laborautomatisierungssystem (10), umfassend:
- eine Laborvorrichtung (200) nach Anspruch 10 oder 11 und
- ein Laborprobenverteilungssystem (100), wobei das Laborprobenverteilungssystem (100) dafür ausgelegt ist, den offenen Laborprobenbehälter (120) mit der angebrachten Verlängerung (190) zu bewegen.

13. Laborautomatisierungssystem (10) nach Anspruch 12, umfassend:
- mehrere Laborstationen (20, 25),
- wobei das Laborprobenverteilungssystem (100) dafür ausgelegt ist, den Laborprobenbehälter (120) und/oder die Laborprobe (130) zwischen den Laborstationen (20, 25) zu verteilen.

## Revendications

1. Procédé de manipulation d'un récipient d'échantillons de laboratoire (120), le procédé comprenant les étapes :
- a) le fait d'assurer automatiquement qu'une ouverture (121) du récipient d'échantillons de laboratoire (120) comprenant un échantillon de laboratoire (130) est ouverte, dans lequel l'échantillon de laboratoire (130) est un échantillon de sang ou un échantillon d'urine, et
- b) l'attachement d'un prolongement (190) au récipient d'échantillons de laboratoire (120), de sorte que le prolongement (190) entoure l'ouverture (121) du récipient d'échantillons de laboratoire (120) et dépasse l'ouverture (121),
- de sorte que l'échantillon de laboratoire (130) compris dans le récipient d'échantillons de laboratoire (120) ouvert est retenu par le prolongement (190) attaché,
- dans lequel l'attachement est réalisé après le fait d'assurer,
**caractérisé par**
- une étape b) comprenant : la formation du prolongement (190) par rotation d'une ébauche de prolongement (191) par rapport au récipient d'échantillons de laboratoire (120) autour du récipient d'échantillons de laboratoire (120).

2. Procédé selon la revendication 1,
- dans lequel le prolongement (190) attaché dépasse l'ouverture (121) d'une longueur (L) d'au moins 1 mm à 20 mm.

3. Procédé selon l'une quelconque des revendications précédentes,
- dans lequel le prolongement (190) comprend une propriété répulsive d'échantillons de laboratoire.

4. Procédé selon l'une quelconque des revendications précédentes,
- l'étape b) comprenant : l'adhérence du prolongement (190) au récipient d'échantillons de laboratoire (120).

5. Procédé selon l'une quelconque des revendications précédentes,
- dans lequel le récipient d'échantillons de laboratoire (120) comprend une étiquette (123) lisible de manière optique depuis l'extérieur,
le procédé comprenant l'étape :
- la lecture de manière optique de l'étiquette (123) pendant l'étape b).

6. Procédé selon l'une quelconque des revendications précédentes, le procédé comprenant l'étape :
- c) le déplacement du récipient d'échantillons de laboratoire (120) ouvert avec le prolongement (190) attaché par un système de distribution d'échantillons de laboratoire (100).

7. Procédé selon la revendication 6,
- dans lequel le système de distribution d'échantillons de laboratoire (100) comprend :
- un porte-récipient d'échantillons (110), dans lequel le porte-récipient d'échantillons (110) est adapté pour transporter le récipient d'échantillons de laboratoire (120),
- un plan de transport (140), dans lequel le plan de transport (140) est adapté pour supporter le porte-récipient d'échantillons (110), et
- un nombre d'éléments d'entraînement (150), dans lequel le nombre d'éléments d'entraînement (150) est adapté pour déplacer le porte-récipient d'échantillons (110) sur le plan de transport (140),
- l'étape c) comprenant : le déplacement du porte-récipient d'échantillons (110) avec le récipient d'échantillons de laboratoire (120) transporté sur le plan de transport (140) par le nombre d'éléments d'entraînement (150).

8. Procédé selon la revendication 7,
- dans lequel le nombre d'éléments d'entraînement (150) comprend un nombre d'actionneurs électromagnétiques (151), dans lequel le nombre d'actionneurs électromagnétiques (151) est disposé de manière stationnaire sur une grille (160, 170) sous le plan de transport (140) et est adapté pour générer un champ magnétique pour déplacer le porte-récipient d'échantillons (110) sur le plan de transport (140) et
- dans lequel le porte-récipient d'échantillons (110) comprend un élément magnétiquement actif (115), dans lequel l'élément magnétiquement actif (115) est adapté pour interagir avec le champ magnétique généré par le nombre d'actionneurs électromagnétiques (151), de sorte qu'une force de déplacement est appliquée au porte-récipient d'échantillons (110),
- l'étape c) comprenant: le déplacement du porte-récipient d'échantillons (110) par le nombre d'actionneurs électromagnétiques (151).

9. Procédé selon l'une quelconque des revendications précédentes, le procédé comprenant l'étape :
- d) la fermeture de l'ouverture (121) du récipient d'échantillons de laboratoire (120) en scellant le prolongement (190) attaché.

10. Appareil de laboratoire (200) adapté pour réaliser un procédé selon la revendication 1, comprenant :
- un dispositif d'assurance (201, 202), dans lequel le dispositif d'assurance (201, 202) est adapté pour s'assurer qu'une ouverture (121) d'un récipient d'échantillons de laboratoire (120) comprenant un échantillon de laboratoire (130) est ouverte, dans lequel l'échantillon de laboratoire (130) est un échantillon de sang ou un échantillon d'urine, et
- un dispositif d'attachement (203), dans lequel le dispositif d'attachement (203) est adapté pour attacher un prolongement (190) au récipient d'échantillons de laboratoire (120), de sorte que le prolongement (190) entoure l'ouverture (121) du récipient d'échantillons de laboratoire (120) et dépasse l'ouverture (121),
- dans lequel l'appareil de laboratoire (200) est adapté, de sorte que l'échantillon de laboratoire (130) compris dans le récipient d'échantillons de laboratoire (120) ouvert est retenu par le prolongement (190) attaché, et de sorte que l'attachement est réalisé après le fait d'assurer,
**caractérisé par**
- le dispositif d'attachement (203) est adapté pour fournir une ébauche de prolongement (191) au récipient d'échantillons de laboratoire (120), de sorte que le prolongement (190) est formé par une rotation de l'ébauche de prolongement (191) par rapport au récipient d'échantillons de laboratoire (120) autour du récipient d'échantillons de laboratoire (120).

11. Appareil de laboratoire (200) selon la revendication 10, comprenant :
- un lecteur optique (205), dans lequel le lecteur optique (205) est adapté pour lire de manière optique une étiquette (123) lisible de manière optique depuis l'extérieur comprise dans le récipient d'échantillons de laboratoire (120) pendant une rotation du lecteur optique (205) par rapport au récipient d'échantillons de laboratoire (120) autour du récipient d'échantillons de laboratoire (120).

12. Système d'automatisation de laboratoire (10), comprenant :
- un appareil de laboratoire (200) selon la revendication 10 ou 11 et
- un système de distribution d'échantillons de laboratoire (100), dans lequel le système de distribution d'échantillons de laboratoire (100) est adapté pour déplacer le récipient d'échantillons de laboratoire (120) ouvert avec le prolongement (190) attaché.

13. Système d'automatisation de laboratoire (10) selon la revendication 12, comprenant :
- un nombre de stations de laboratoire (20, 25),
- dans lequel le système de distribution d'échantillons de laboratoire (100) est adapté pour distribuer le récipient d'échantillons de laboratoire (120) et/ou l'échantillon de laboratoire (130) entre les stations de laboratoire (20, 25).
